# EUROPEAN PATENT APPLICATION

(11) **EP 2 608 143 A1**
(43) Date of publication of application: **26.06.2013**
(21) Application number: 11195644.7
(22) Date of filing: 23.12.2011
(51) Int. Cl.: G06Q 30/02

(54) **Cross-platform software distribution**

(71) Applicant: Research In Motion Limited, Waterloo, ON N2L 3W8 (CA)
(72) Inventor: Martin, Daryl Joseph, Waterloo, Ontario N2L 5R9 (CA)
(74) Representative: Patel, Binesh

(57) **Abstract**

Methods, apparatus, and systems for cross-platform software distribution are described. An example method includes receiving, at a first distribution server of a first vendor, a first version of a software application for a first platform and information about the software application, wherein the information about the software application includes: an identification of a second version of the software application for a second platform and an identification of a second distribution server of a second vendor at which the second version of the software application is available; storing the information in a physical storage; and transmitting the information from the physical storage to a purchaser of the software application.

## Description

### CROSS-PLATFORM SOFTWARE DISTRIBUTION

### FIELD OF THE DISCLOSURE

This disclosure relates generally to software applications, and, more particularly, to cross-platform software distribution.

### BACKGROUND

Software applications have traditionally been purchased on a physical medium and installed by communicatively coupling the physical medium to a computing device. The increase in the popularity of online services has led to the expansion of electronic distribution of software applications. Several software application stores/marketplaces have been created to serve software applications to online devices. A computing device can connect to a server of the store/marketplace, browse available software applications, purchase an application, and electronically receive the software application for installation.

### BRIEF DESCRIPTION OF THE DRAWINGS

For a better understanding of the various implementations described herein and to show more clearly how they may be carried into effect, reference will now be made, by way of example only, to the accompanying drawings which show at least one example implementation and in which:
FIG. 1 is a block diagram of an example system for distributing software;
FIG. 2 is a block diagram of an example implementation of the manager of FIG. 1;
FIGS. 3-5 are flowcharts illustrating example processes to implement the manager of FIGS. 1-2;
FIGS. 6-7 illustrate example graphical user interfaces; and
FIG. 8 is a block diagram of an example computer capable of executing the instructions of FIGS 3-5 to implement, for example, the manager of FIGS. 1-2.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the implementations described herein. However, the implementations described herein may be practiced without these specific details. In other instances, well-known methods, procedures and components have not been described in detail so as not to obscure the implementations described herein. Also, the description is not to be considered as limiting the scope of the implementations described herein.

Users of computing devices often own several different computing devices. These computing devices may operate on different platforms (e.g., processor instruction sets, operating systems, programming environments, processor speeds, video capabilities, or any other characteristic of a computing device on which a software application relies for compatibility). Individual versions of software applications are often compiled to execute on a single platform. Accordingly, software developers will often compile several versions of the software application to support several different platforms. This means that a user that obtains a version of a software application for a single computing device will not be able to utilize the version of the software application on other computing devices. Such users may not be aware of the existence of other versions of the software application for supporting other computing device platforms. This is particularly true where the other versions are made available in a different store/market from the store/market from which the software application was obtained.

Some examples described herein facilitate the notification of users of the availability of other versions of a software application that support other platforms. In some examples, a software developer provides a version of an application to a software application market/store of a vendor. The developer also provides information about other versions of the software application. The information and the version of the software application are stored by the market/store of the vendor. Accordingly, after a user purchases the software application, information about the other versions is transmitted to the user. For example, a link to one or more of the other versions that reside on a server of another market/store of another vendor may be transmitted to the user. Accordingly, the user is notified of the other versions. Such notification may encourage users to purchase additional versions of the software application from the software developer (via the store/market of the other vendor).

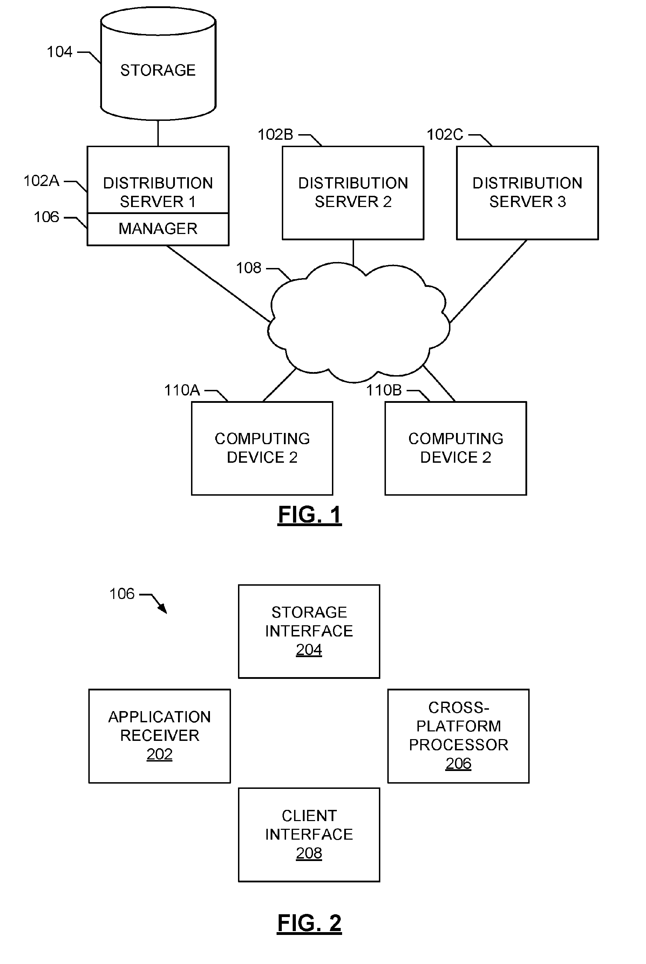

FIG. 1 is a block diagram of an example system 100 for distributing software. The example system 100 includes three distribution servers 102A, 102B, 102C associated with three vendors communicatively coupled with two computing devices 110A, 110B via a communication network 108. While an example number of elements are shown in FIG. 1 for purposes of illustration, any number of elements may be provided. For example, any number of distribution servers, vendors, computing devices, and networks maybe included in an implementation.

The distribution servers 102A, 102B, 102C distribute software applications to the computing devices 110A, 110B. According to the illustrated example, each of the distribution servers 102A, 102B, 102C are managed by different entities. For example, the first distribution server 102A may be managed by the vendor Research in Motion®, the second distribution server 102B may be managed by the vendor Apple®, and the third distribution server 102C may be managed by the vendor Google®. Alternatively, the distribution servers 102A, 102B, 102C may be managed by a single entity or any other number of entities. According to the illustrated example, the distribution servers 102A, 102B, 102C each provide software applications for a different platform. For example, the first distribution server 102A may provide software applications for BlackBerry® platforms, the second distribution server 102B may provide software applications for iOS platforms, and the third distribution server 102C may provide software applications for Android™ platforms. Alternatively, any other platforms may be supported and any distribution of servers and platforms may be provided. Furthermore, multiple platforms may be supported by a single distribution server 102A, 102B, 102C.

The distribution servers 102A, 102B, 102C of the illustrated example manage the purchase, accounting, and distribution of software applications. The distribution servers 102A, 102B, 102C also manage the receipt and storage of software applications from software developers and other entities. The responsibilities of the distribution servers 102A, 102B, 102C may be divided among any number of components of the distribution servers 102A, 102B, 102C.

In the illustrated example, the first distribution server 102A includes storage 104. The storage 104 may be any number and type of storage. For example, the storage 104 may be any number of databases, files, data structures, file systems, etc. The storage 104 may be implemented by any number of physical storage such as, for example, hard drives, memory units, storage servers, etc. While the example first distribution server 102A includes the storage 104, storage may be provided for any of the other distribution servers 102B, 102C. Furthermore, the storage 104 may optionally be accessible to any of the other distribution servers 102B, 102C.

The example first distribution server 102A also includes a manager 106. The manager 106 manages the receipt of software applications from content producers, the receipt of information associated with the software applications, and the distribution of information associated with the software applications. In particular, the information that is received and distributed includes information about the availability of one or more software applications in one or more other versions that support one or more other platforms. The information about other versions of the software application that support other platforms enables the first distribution server 102A to notify users of the computing devices 110A, 110B. The manager 106 of the illustrated example stores the software applications and information about the software applications in the storage 104 for later retrieval.

The manager 106 of the illustrated example transmits the information about other versions of a software application after a purchase of the software application is completed. For example, at the conclusion of a purchase transaction of a software application for a platform of a computing device (e.g., the computing devices 110A, 110B), the manager 106 transmits information about other versions of the software application that support other platforms. Alternatively, the manager 106 may transmit the information at any other time. For example, the manager 106 may transmit the information when requested by a user or a computing device, when a software application with other versions supporting other platforms is detected at a computing device, etc.

While the example manager 106 is provided at the distribution server 102A, managers 106 may be provided at one or both of the distributions servers 102B and 102C.

According to the illustrated example, other versions of the software application are stored at one of the distribution servers 102B, 102C. Accordingly, the manager 106 transmits the information about the other versions with instructions for accessing the other versions from the distribution servers 102B, 102C. For example, the instructions may include one or more of a hyperlink, a universal resource locator, a file path, instructions to be completed by a user, etc.

Optionally, the manager 106 may manage the purchase and/or retrieval of other versions of a software application. For example, the manager 106 may store multiple versions of a software application in the storage 104 and may transmit the other versions to a computing device that purchased the software application, to a computing device that is owned, run, or authorized by a user that purchased the software application, and so forth. Alternatively, the manager 106 may retrieve other versions of the software application from one of the distribution servers 102B, 102C and may transmit the other versions to a computing device that purchased the software application, to a computing device that is owned, run, or authorized by a user that purchased the software application, and so forth.

The example computing devices 110A, 110B are two computing devices that are owned and managed by a single user and communicate with one or more of the distribution servers 102A, 102B, 102C to obtain software applications for execution. According to the illustrated example, the first computing device 110A is a mobile device that utilizes a BlackBerry® platform and the second computing device 110B is a mobile device that utilizes an iOS platform. Alternatively, the computing devices 110A, 110B may be any one or more of a mobile device, a mobile phone, a tablet computer, a personal computer, a laptop computer, a server, an embedded processing device, or any other type of computing device. Furthermore, the computing devices 110A, 110B may utilize any type of platform such as, for example, any processor instruction sets, operating systems, programming environments, processor speeds, video capabilities, or any other characteristic of a computing device on which a software application relies for compatibility.

The example computing devices 110A, 110B include one or more software components that facilitate communication with the distribution servers 102A, 102B, 102C and the retrieval and installation of software applications. Alternatively, no dedicated software components may be included on the computing devices 110A, 110B for interaction with the software distribution servers 102A, 102B, 102C (e.g., the computing devices 110A, 110B may include a web browser that facilitates communication with the distribution servers 102A, 102B, 102C and the retrieval of software applications).

The network 108 of the illustrated example is a wide area network that communicatively couples the distribution servers 102A, 102B, 102C and the computing devices 110A, 110B. The network 108 may be any type of network and any number of networks may be included. For example, the network 108 may be implemented by any number of local area network, any number of wide area networks, any number of wireless networks, any number of wired networks, any number of cellular data networks, any number of public networks, any number of private networks, etc. Alternatively, the network 108 may be eliminated when one or more of the computing devices 110A, 110B may be connected directly to one or more of the distribution servers 102A, 102B, 102C.

According to an example implementation, the first computing device 110A is a mobile computing device that utilizes a BlackBerry® platform, the second computing device 110B is a desktop computer that utilizes a Windows@ platform, the first distribution server 102A is a BlackBerry® software application distribution server (e.g., the BlackBerry App World™), and the second distribution server 102B is a Windows@ software application distribution server (e.g., the Microsoft Store). In an example scenario, a user of the first computing device 110A purchases a sample application from the first distribution server 102A for use on the first computing device 110A (e.g., a software application that is compatible with a BlackBerry® platform). The manager 106 transmits information about availability of versions of the software application for other platforms to the first computing device 110A for display to the user. For example, information about a version of the software application that supports a Windows@ platform may be transmitted. In the example scenario, the user requests that the manager 106 send an email to a previously registered email account wherein the email includes a link to the other version of the software application. According to the example scenario, the user then uses the second computing device 110B to visit the link and retrieve the version of the software application that is compatible with the second computing device 110B.

Turning to FIG. 2, a block diagram of an example implementation of the manager 106 of FIG. 1 is illustrated. The example manager 106 includes an application receiver 202, a storage interface 204, a cross-platform processor 206, and a client interface 208.

The example application receiver 202 receives software applications and information about the software applications (including information about other versions that support additional platforms) from software developers or other entities. According to the illustrated example, the application receiver 202 provides a webpage interface that enables the software developers or other entities to upload a software application and information about the software application to the first distribution server 102A. Alternatively, the application receiver 202 may receive applications and information in any other manner. For example, the information may be in an extensible markup language format, may be in a hypertext markup language format, may be in a comma separated file, may be provided in any type of form, may be bundled with the software application, etc. The application receiver 202 provides the software applications and the information to the storage interface 204.

The example storage interface 204 interfaces with the storage 104 of FIG. 1 to store and retrieve software applications and information about the software applications. The storage interface 204 stores software applications and information received from the application receiver 202. For example, the storage interface 204 may store information about multiple versions of the same application in a linked data structure so that information about software versions related to the same application can be retrieved. The example storage interface 204 provides information retrieved from the storage 104 regarding versions of software applications that support various platforms to the cross-platform processor 206. The example storage interface 204 provides software applications retrieved from the storage 104 to the client interface 208.

The cross-platform processor 206 of the illustrated example receives an identity of an application purchased by a user of a computing device, an application installed on a computing device, or any other software applications and requests information about other versions from the storage interface 204. For example, the cross-platform processor 206 may send a query with the identity of a software application and a current platform to the storage interface 204, which will transmit information about other versions of the software application associated with other platforms to the cross-platform processor 206. The cross-platform processor 206 generates a notification of the information for transmitting via the client interface 208. For example, the notification may be a message to be displayed on one of the computing devices 110A, 110B, may be an electronic message sent to an electronic message account, etc. The notification may include a hyperlink, a universal resource locator, a file path, instructions to be completed by a user, a serial number for the software application, etc.

The client interface 208 of the illustrated example receives software applications from the storage interface 204 and notifications from the client interface 208 and transmits the software applications and notifications to one or more of the computing devices 110A, 110B. Furthermore, the example client interface 208 receives information about the computing devices 110A, 110B from the computing devices 110A, 110B. For example, the client interface 208 may receive a list of applications installed on the computing devices 110A, 110B. Information retrieved from the computing devices 110A, 110B is transmitted to the cross-platform processor 206 to facilitate the identification of other versions of software applications.

While an example manner of implementing the manager 106 of FIG. 1 has been illustrated in FIG. 2, one or more of the elements, processes and/or devices illustrated in FIG. 2 may be combined, divided, re-arranged, omitted, eliminated and/or implemented in any other way. Further, the example application receiver 202, the example storage interface 204, the example cross-platform processor 206, the client interface 208 and/or, more generally, the example manager 106 of FIG. 2 may be implemented by hardware, software, firmware and/or any combination of hardware, software and/or firmware. Thus, for example, any of the example application receiver 202, the example storage interface 204, the example cross-platform processor 206, the client interface 208 and/or, more generally, the example manager 106 or any other component of the system 100 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the apparatus or system claims of this disclosure are read to cover a purely software and/or firmware implementation, at least one of the example application receiver 202, the example storage interface 204, the example cross-platform processor 206, the client interface 208 are hereby expressly defined to include a tangible computer readable medium such as a memory, DVD, CD, Blu-ray, etc. storing the software and/or firmware. Further still, the example manager 106 of FIG. 2 may include one or more elements, processes and/or devices in addition to, or instead of, those illustrated in FIG. 2, and/or may include more than one of any or all of the illustrated elements, processes and devices.

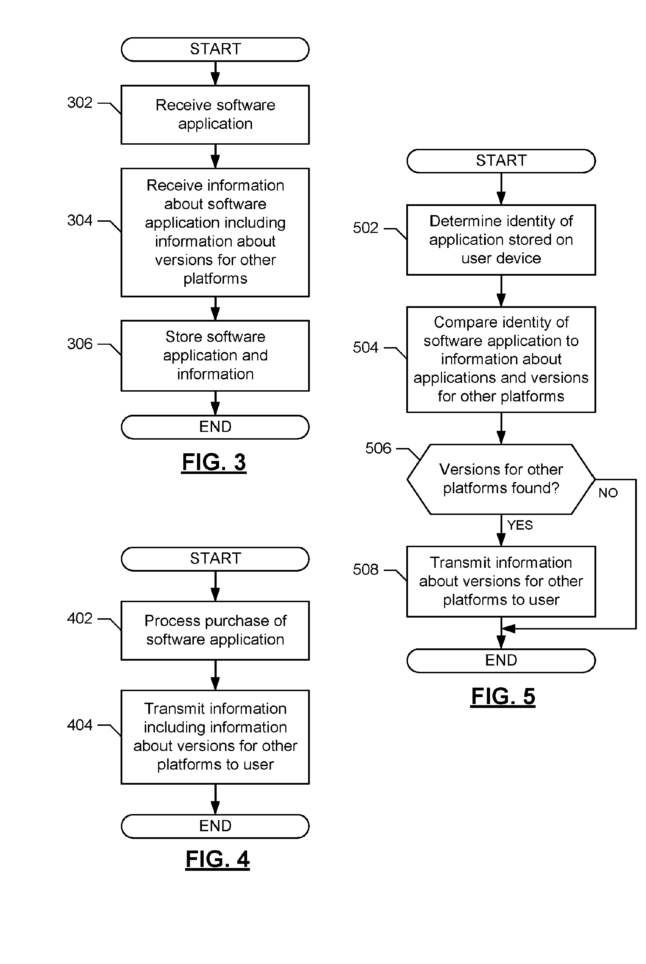

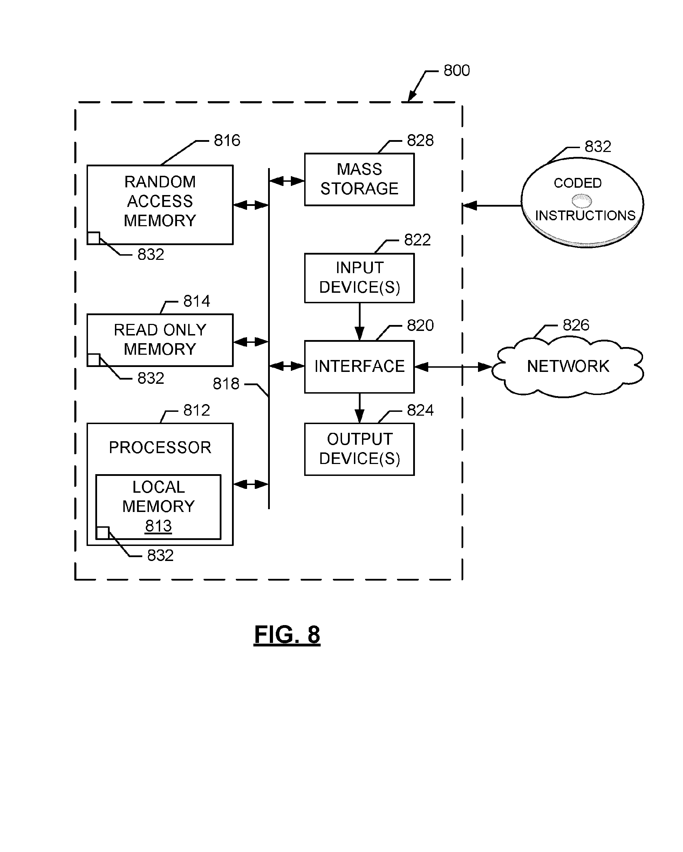

Flowcharts representative of example machine readable instructions for implementing the manager 106 of FIGS. 1 and 2 are shown in FIGS. 3-5. In this example, the machine readable instructions comprise a program for execution by a processor such as the processor 812 shown in the example computer 800 discussed below in connection with FIG. 8. The program may be embodied in or stored on a tangible computer readable medium such as a CD-ROM, a floppy disk, a hard drive, a digital versatile disk (DVD), a Blu-ray disk, or a memory associated with the processor 812, but the entire program and/or parts thereof could alternatively be executed by a device other than the processor 812 and/or embodied in firmware or dedicated hardware. Further, although the example program is described with reference to the flowcharts illustrated in FIGS. 3-5, many other methods of implementing the example manager 106 may alternatively be used. For example, the order of execution of the blocks may be changed, and/or some of the blocks described may be changed, eliminated, or combined.

As mentioned above, the example processes of FIGS. 3-5 may be implemented using coded instructions (e.g., computer readable instructions) stored on a tangible computer readable medium such as a hard disk drive, a flash memory, a read-only memory (ROM), a compact disk (CD), a digital versatile disk (DVD), a cache, a random-access memory (RAM) and/or any other storage media in which information is stored for any duration (e.g., for extended time periods, permanently, brief instances, for temporarily buffering, and/or for caching of the information). As used herein, the term tangible computer readable medium is expressly defined to include any type of computer readable storage and to exclude propagating signals. Additionally or alternatively, the example processes of FIGS. 3-5 may be implemented using coded instructions (e.g., computer readable instructions) stored on a non-transitory computer readable medium such as a hard disk drive, a flash memory, a read-only memory, a compact disk, a digital versatile disk, a cache, a random-access memory and/or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium and to exclude propagating signals. As used herein, when the phrase "at least" is used as the transition term in a preamble of a claim, it is open-ended in the same manner as the term "comprising" is open ended. Thus, a claim using "at least" as the transition term in its preamble may include elements in addition to those expressly recited in the claim.

While the processes of FIGS. 3-5 are described with references to the blocks of FIGS. 1 and 2, elements of the processes may be implemented by other than the described blocks of FIGS. 1 and 2 or any other blocks.

The process of FIG. 3 begins when the software receiver 202 receives a software application to be stored for distribution by the first distribution server 102A (block 302). The software application may be provided to the first distribution server 102A by a developer of the software application or any other entity. The software receiver 202 additionally receives information about the software application (block 304). According to the illustrated example, the information includes information about versions of the software application and the platforms that they support. The information also includes information about how the versions of the software application can be obtained and their associated platform support. The storage interface 204 stores the software application and the information in the storage 104 (block 306).

The process of FIG. 4 begins when a software application purchase by the first computing device 110A is processed by the first distribution server 102A (block 402). The cross-platform processor 206 transmits information about other versions of the software application to the purchaser of the software application via the client interface 208 (block 404). For example, the cross-platform processor 206 may transmit information about a version of the software application that is compatible with the platform of the second computing device 110B. The information may be transmitted in an electronic mail message, a short messaging service message, an instant electronic message (e.g., BlackBerry Messenger (BBM™), Apple iMessage, etc.), data to be displayed in an application, etc.

The process of FIG. 5 begins when the cross-platform processor 206 receives an identity of an application stored at the first computing device 110A (block 502). The identity may be received by the client interface 208. For example, a user of the first computing device 110A may initiate an enumeration of the software applications installed at the first computing device 110A, software at the first computing device may automatically initiate an enumeration of the software applications (e.g., according to a schedule or other trigger), a user of the first computing device 110A or a software application may transmit a request to the first distribution server 102A including the identity of the software application, etc.

The cross-platform processor 206 compares the identity of the software application to information about applications and versions for other platforms (block 504). For example, the cross-platform processor 206 retrieves the information from the storage 104 via the storage processor 204 and identifies information about other platforms for the software application. The cross-platform processor 206 determines if other platforms are found (block 506). When versions of the software application are not found, the process of FIG. 5 ends. When other versions are found, the cross-platform processor 206 transmits information about the other versions to the user via the client interface 208 (block 508). The process of FIG. 5 then ends or continues with the processing of another identified software application.

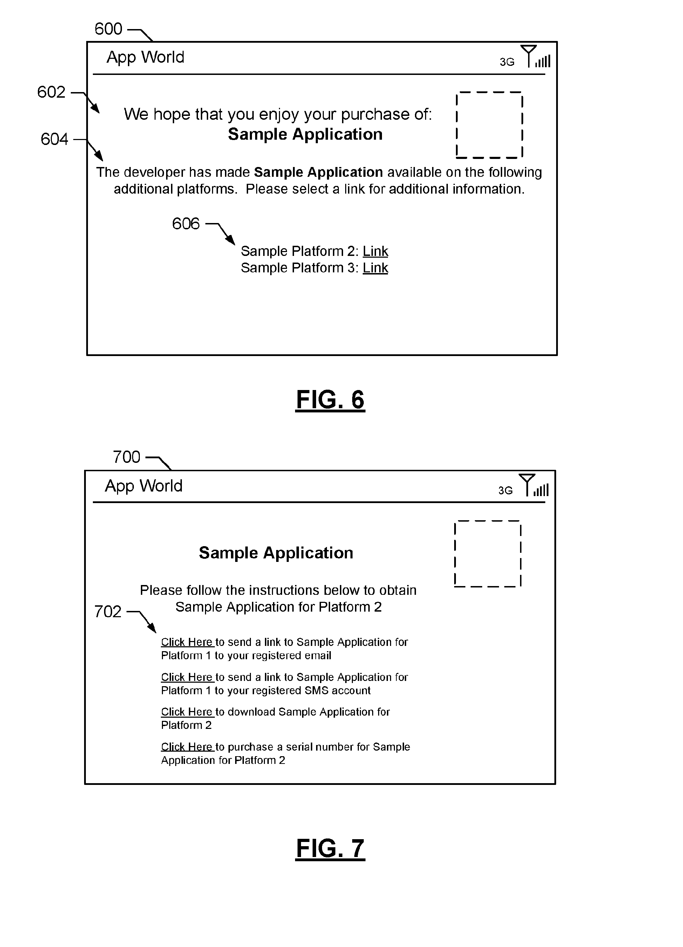

FIGS. 6 and 7 illustrate example graphical user interfaces 600, 700 that may be displayed at one of the computing devices 110A, 110B to provide information about additional platforms supported by a software application.

The example graphical user interface 600 is displayed after a purchase of "Sample Application" has been processed. Alternatively, the graphical user interface 600 or a similar graphical user interface may be displayed after a software application has been downloaded, after a request for information about the software application is received, after an application is identified on the computing device 110A, 110B, etc. The example graphical user interface includes a message 602 thanking the purchaser for their purchase of "Sample Application." The example graphical user interface also includes a message 604 indicating that there are additional platforms supported by the "Sample Application." The example graphical user interface includes two example links 606 which can be selected to obtain additional information about versions of the software application that support the additional two sample platforms. For example, the purchased software application may support the BlackBerry® platform, sample platform 2 may be the iOS platform, and sample platform 3 may be the Microsoft Windows@ platform.

The example graphical user interface 700 is displayed after one of the links 606 of FIG. 6 is selected. Alternatively, the graphical user interface 700 or a similar graphical user interface may be displayed after a software application has been downloaded, after a request for information about the software application is received, after an application is identified on the computing device 110A, 110B, etc. The example graphical user interface 700 includes several links that can be selected to obtain further information about another version of the "Sample Application."

For example, when selection of the first link is detected, the cross-platform processor 206 transmits an email to an email address that has been previously registered. The email includes a link to another distribution server at which the other version of the software application can be downloaded, purchased, reviewed, etc. A prompt may be displayed for enabling the user to input an email address. When selection of the second link is detected, the cross-platform processor 206 transmits a short messaging service message to a phone number that has been previously registered. The message includes a link to another distribution server at which the other version of the software application can be downloaded, purchased, reviewed, etc. When selection of the third link is detected, the cross-platform processor 206 causes the other version of the software application to be retrieved from the storage 104 via the storage interface 204 and transmitted to the accessing computing device 110A, 110B via the client interface 208. Alternatively, the cross-platform processor 206 may retrieve the other version of the software application from another location (e.g., another distribution server) and transmit the software application to the accessing computing device 110A, 110B via the client interface 208. The cross-platform processor 206 may also transmit instructions for a user to follow for transferring the downloaded application from the accessing computing device to another computing device (e.g., from the computing device 110A to the computing device 110B). When selection of the fourth link is detected, the cross-platform processor 206 coordinates with purchasing/account components of the distribution server 110A to process a purchase of another version of the software application. The cross-platform processor 206 then transmits a serial number associated with the purchase of the other version of the software application. Alternatively, any other type of credential associated with the purchase may be transmitted such as, for example, a key, a license, a certificate, etc.

While several options for transmitting further information about the other version of the software application are listed in FIG. 7, any one or more of the options may be displayed, any combination of the options may be performed, and any other options may be displayed. For example, a link may be provided for purchasing the other version of the software application and transmitting an electronic message including instructions (e.g., a hyperlink, universal resource locator, user instructions, etc.) for retrieving the other version of the software application (e.g., to be performed at another computing device).

FIG. 8 is a block diagram of an example computer 800 capable of executing the instructions of FIGS 3-5 to implement the manager 106 of FIGS. 1-2. Additionally, the computer 800 is capable of executing instructions to implement one or more of the computing devices 110A, 110B of FIG. 1. The computer 800 can be, for example, a server, a personal computer, a mobile phone (e.g., a cell phone), a personal digital assistant (PDA), an Internet appliance, a DVD player, a CD player, a digital video recorder, a Blu-ray player, a gaming console, a personal video recorder, a set top box, or any other type of computing device.

The system 800 of the instant example includes a processor 812. For example, the processor 812 can be implemented by one or more microprocessors or controllers from any desired family or manufacturer.

The processor 812 includes a local memory 813 (e.g., a cache) and is in communication with a main memory including a volatile memory 814 and a non-volatile memory 816 via a bus 818. The volatile memory 814 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 816 may be implemented by flash memory and/or any other desired type of memory device. Access to the main memory 814, 816 is controlled by a memory controller.

The computer 800 also includes an interface circuit 820. The interface circuit 820 may be implemented by any type of interface standard, such as an Ethernet interface, a universal serial bus (USB), and/or a PCI express interface.

One or more input devices 822 are connected to the interface circuit 820. The input device(s) 822 permit a user to enter data and commands into the processor 812. The input device(s) can be implemented by, for example, a keyboard, a mouse, a touchscreen, a trackpad, a trackball, isopoint and/or a voice recognition system.

One or more output devices 824 are also connected to the interface circuit 820. The output devices 824 can be implemented, for example, by display devices (e.g., a liquid crystal display, a cathode ray tube display (CRT), a printer and/or speakers). The interface circuit 820, thus, typically includes a graphics driver card.

The interface circuit 820 also includes a communication device such as a modem, a network interface card, a cellular network interface, etc. to facilitate exchange of data with external computers via a network 826 (e.g., an Ethernet connection, a digital subscriber line (DSL), a telephone line, coaxial cable, a cellular telephone system, etc.).

The computer 800 also includes one or more mass storage devices 828 for storing software and data. Examples of such mass storage devices 828 include floppy disk drives, hard drive disks, compact disk drives and digital versatile disk (DVD) drives.

The coded instructions 832 of FIGS. 3-5 may be stored in the mass storage device 828, in the volatile memory 814, in the non-volatile memory 816, and/or on a removable storage medium such as a CD or DVD.

From the foregoing, it will be appreciated that the above disclosed methods, apparatus and articles of manufacture facilitate the distribution of multiple versions of software applications that support multiple platforms. Accordingly, some implementations encourage the purchase and/or download of multiple version of a software application by notifying purchases and/or downloaders of availability of multiple versions of a software application. While, in some examples, the distributor of the software applications does not sell and, therefore, get paid for the purchases of additional versions of the software application, the information about other versions may, in some instances, establish further goodwill software developers, software purchasers, software downloaders, etc.

Although certain example methods, apparatus and articles of manufacture have been described herein, the scope of coverage of this disclosure is not limited thereto. On the contrary, this disclosure covers all methods, apparatus and articles of manufacture fairly falling within the scope of the claims of this disclosure.

## Claims

1. A method comprising:
receiving, at a first distribution server of a first vendor, a first version of a software application for a first platform and information about the software application, wherein the information about the software application includes:
an identification of a second version of the software application for a second platform, and
an identification of a second distribution server of a second vendor at which the second version of the software application is available;
storing the information in a physical storage; and
transmitting the information from the physical storage to a purchaser of the software application.

2. The method according to claim 1, wherein the first platform is a mobile operating system.

3. The method according to claim 1 or claim 2, wherein the identification of the second distribution server is a link to the second distribution server.

4. The method according to claim 3, wherein transmitting the information comprises sending an electronic message that includes the link to an electronic message account associated with the purchaser.

5. The method according to claim 4, wherein the electronic message is at least one of an electronic mail message, a short messaging service message, and an instant electronic message.

6. The method according to claim 3, wherein transmitting the information comprises displaying the link in an application on a computing device associated with the purchaser.

7. The method according to claim 3, wherein transmitting the information comprises instructing an application on a computing device associated with the purchaser to retrieve the second version of the software application and to install the second version of the software application.

8. The method according to any of claims 1 to 7, wherein transmitting the information includes transmitting the second version of the software application to a computing device associated with the purchaser.

9. The method according to claim 8, wherein the computing device is of the first platform.

10. The method according to claim 9, further comprising transmitting to the purchaser instructions for transferring the second version of the software application from the computing device to a second computing device of the second platform.

11. The method according to any of claims 1 to 10, wherein the second distribution server sells applications for the second platform.

12. The method according to any of claims 1 to 11, wherein transmitting the information comprises transmitting a serial number associated with the second version of the software application to the purchaser of a first version of the software application.

13. The method according to any of claims 1 to 12, wherein the information is stored in an extensible markup language file.

14. The method according to any of claims 1 to 13, wherein the physical storage is at least one of random access memory, a hard drive, or a flash memory.

15. A server comprising:
an application receiver to receive a first version of a software application for a first platform and information about the software application, wherein the information about the software application includes:
an identification of a second version of the software application for a second platform, and
an identification of a second distribution server at which the second version of the software application is available;
a storage to store the information;
a client interface to transmit the information from the physical storage to a purchaser of the software application.
